# EUROPÄISCHE PATENTSCHRIFT

(11) **EP 0 344 534 B1**
(45) Veröffentlichungstag und Bekanntmachung des Hinweises auf die Patenterteilung: **25.08.1993**
(21) Anmeldenummer: 89108980.7
(22) Anmeldetag: 18.05.1989
(51) Int. Cl.: H04J 3/14

(54) **Verfahren zur Qualitätsüberwachung eines Digitalsignals in Abschnitten einer Übertragungsstrecke**
Method of monitoring the quality of digital signals in sections of a transmission line
Procédé de surveillance de qualité de signaux numériques dans des sections d'une ligne de transmission

(30) Priorität: 01.06.1988 DE 3818716
(43) Veröffentlichungstag der Anmeldung: 06.12.1989
(73) Patentinhaber: SIEMENS AKTIENGESELLSCHAFT, 80333 München (DE)
(72) Erfinder: Appelmann, Wolfgang, Dipl.-Ing., D-8000 München 70 (DE)

(56) Entgegenhaltungen:
- DE-A- 2 556 079
- GB-A- 1 401 261

## Beschreibung

Eine Qualitätsüberwachung beinhaltet einerseits die Feststellung und Meldung von Mängeln am Digitalsignal oder dessen Ausbleiben und andererseits die Ermittlung von langfristigen Änderungen der Übertragungseigenschaften der Strecken.

Aus der Zeitschrift "telcom report", 10 (1987) Heft 2, Seiten 102 - 107, Bild 8 ist der Aufbau eines zentralgesteuerten Netzersatz-Schaltsystems bekannt. Bei Übertragungsstrecken mit Schaltstationen, die auch als Digitalsignalverteiler oder Cross-Connect-Einrichtungen bezeichnet werden, sind diese mit regionalen Zentralen verbunden, die wiederum mit einer Netzmanagement-Zentrale in Verbindung stehen. Meldet eine regionale Zentrale beispielsweise eine Unterbrechung der Übertragungsstrecke, dann veranlaßt die Netzmanagement-Zentrale die Schaltung eines Ersatzweges.

In dem britischen Patent GB-A-1 401 261 ist ein Multiplex-Datenübertragungssystem beschrieben, bei dem gestörte Bits von Zwischenstationen ohne Korrektur ausgesendet werden, um eine Fehleranalyse und Alamierung durchführen zu können.

Aus den CCITT-Empfehlungsentwürfen G.70X, G.70Y und G.70Z, die zu den CCITT Empfehlungen G.707, 708 und 709 geführt haben (CCITT-Blue Book Volume III, Fascicle III.4), ist weiter eine synchrone Digitalsignal-Hierarchie bekannt. Digitalsignale der untersten Hierarchieebene weisen eine Bitrate von 155,52 Mbit/s und einen Pulsrahmen auf, der als synchroner Transportmodul STM-1 bezeichnet wird. Dieser besteht aus einem Abschnittsrahmenkopf (section overhead), einer Verwaltungseinheit (administration unit) und einem Verwaltungseinheitszeiger (administration unit pointer). In die Verwaltungseinheit kann ein virtueller Container eingefügt werden, dessen Anfang der Verwaltungseinheitszeiger angibt. Der virtuelle Container besteht wiederum aus einem Pfadrahmenkopf (path overhead) und einem Container, in dem ein 139,264-Mbit/s-Signal Platz findet.

Dieser virtuelle Container enthält 2349 byte zu je 8 bit. Im genormten B3-Byte im Pfadrahmenkopf befindet sich zur Paritätsüberwachung ein BIP-8-Codewort (bit-interleaved-parity-8-code), in dem erfaßt ist, ob die Summe der logischen Zustände jeweils einer Bitstelle aller 2349 byte gerade oder ungerade ist, (CCITT, Blue Book, Volume III, Fascicle III.4 (1989), Seite 120, Rec. G.708, 5.2.1.6). Dieses BIP-8-Codewort wird bei störungsfreiem Betrieb unverändert von der Digitalsignalquelle bis zur Digitalsignalsenke übertragen.

Im synchronen Transportmodul STM-1 sind noch weitere Überwachungen vorgesehen:
Ein genormtes B1-Byte wird in jedem Regenerator neu gebildet. Diese Überwachung reicht daher nur von Regenerator zu Regenerator. Ein genormtes B2-Byte wird zumindest an den Orten neu gebildet, wo der Zeigerinhalt neu gesetzt wird, was in höheren Multiplexgeräten und eventuell auch in Leitungsendgeräten erfolgt.

Der Erfindung liegt die Aufgabe zugrunde, ein Überwachungsverfahren anzugeben, das Abschnitte zwischen Digitalsignalverteilern und zwischen der Digitalsignalquelle bzw. der Digitalsignalsenke und dem benachbarten Digitalsignalverteiler erfaßt.

Diese Aufgabe wird erfindungsgemäß mit den Merkmalen der Ansprüche 1 und 2 gelöst.

Anhand von Ausführungsbeispielen wird die Erfindung nachstehend näher erläutert.
- Fig. 1: zeigt den Aufbau eines zentral gesteuerten Netzersatzschaltsystems,
- Fig. 2: zeigt einen synchronen Transportmodul STM-1 mit einem virtuellen Container VC-4 und
- Fig. 3: zeigt Bytes im virtuellen Container VC-4.

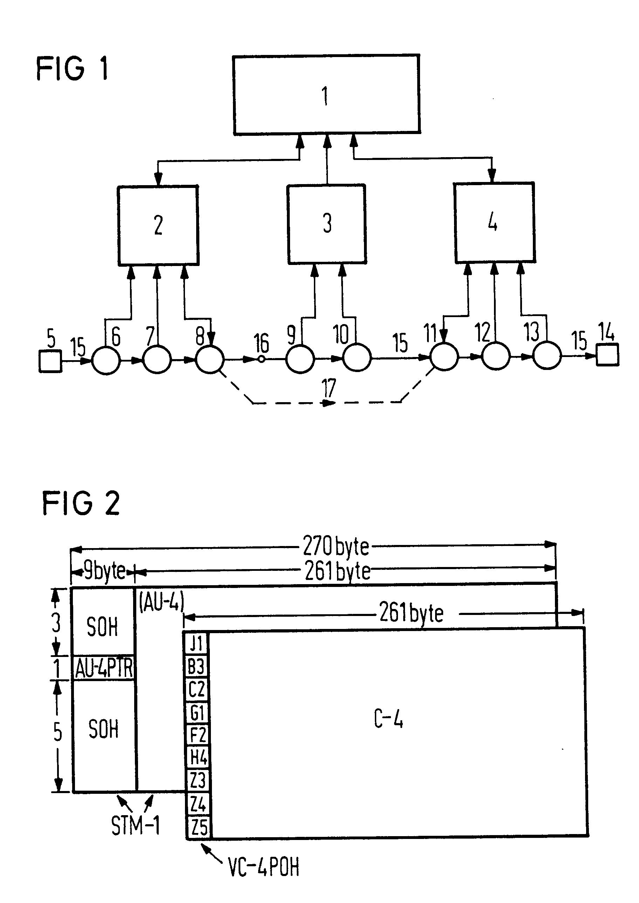

Fig. 1 zeigt ein zentralgesteuertes Netzersatz-Schaltsystem mit einer Netzmanagement-Zentrale 1, mit regionalen Zentralen 2-4, mit einer Digitalsignalquelle 5, mit Digitalsignalverteilern 6-13, mit einer Digitalsignalsenke 14, mit einer Übertragungsstrecke 15, mit einer Störstelle 16 und mit einem Ersatzweg 17.

Ein Digitalsignal wird von der Digitalsignalquelle 5 zur Digitalsignalsenke 14 über die Übertragungsstrecke 15 übertragen. Zwischen der Digitalsignalquelle 5 und der Störstelle 16 ist das Digitalsignal ohne Mängel. Die Digitalsignalverteiler 6-8 melden keine Störung an die regionale Zentrale 2. Die nach der Störstelle 16 liegenden Digitalsignalverteiler 9-13 erkennen die Störung und melden diese an die regionalen Zentralen 3 und 4. Die Netzmanagement-Zentrale 1 veranlaßt aufgrund dieser Meldungen die Schaltung des Ersatzweges 17.

Fig. 2 zeigt einen synchronen Transportmodul STM-1 mit dem Abschnittsrahmenkopf SOH, der Verwaltungseinheit AU-4, dem Verwaltungseinheitszeiger AU-4 PTR, dem virtuellen Container VC-4, dem Pfadrahmenkopf VC-4 POH und dem Container C-4. Der Pfadrahmenkopf VC-4 POH enthält Bytes J1, B3, C2, E1, F2 und H4, die nach CCITT bereits für eine bestimmte Verwendung vorgesehen sind. Die Bytes Z3, Z4 und Z5 sind dagegen noch frei verfügbar.

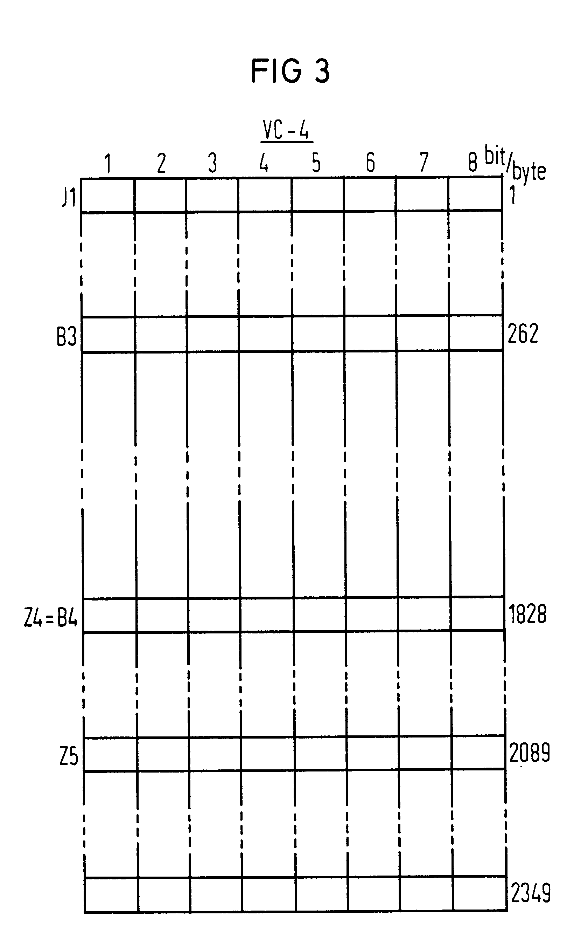

In Fig. 3 sind alle 2349 Bytes des virtuellen Containers VC-4 untereinander dargestellt. Das oberste Byte ist ein genormtes hier nicht interessierendes J1-Byte; sonst sind die Bytes B3, Z4 und Z5 hervorgehoben. Im B3-Byte befindet sich ein BIP-8-Codewort als B3-Überwachung. Dies zeigt in jedem seiner 8 bit, ob die Bitanzahl der jeweiligen Bitstelle in den Bytes 1-261 und 263-2349 gerade oder ungerade ist. Dieses B3-Byte darf durch Einfügungen in die Z4- und Z5-Zeitschlitze nicht verfälscht werden.

Dies ist dann nicht der Fall, wenn in den Z4-und den Z5-Zeitschlitz das Zusatz-BIP-8-Codewort und ein gleiches Korrektur-Codewort eingefügt werden. Dies setzt voraus, daß bereits an der Quelle in die Z4-und Z5-Zeitschlitze gleiche Codewörter eingespeist wurden. War dies nicht der Fall, dann gingen diese Codewörter in die Bildung des B3-Bytes ein. Wenn man jetzt in den Z4-Zeitschlitz ein Zusatz-BIP-8-Codewort einfügt, muß man in jedem Digitalsignalverteiler 6-13 in den Z5-Zeitschlitz ein Korrektur-Codewort einfügen, dessen Bitfolge nach Auswertung des ankommenden Zusatz-BIP-8-Signals und des ankommenden Korrektursignals derart gewählt ist, daß die B3-Überwachung keine Veränderung merkt.

Jeder Digitalsignalverteiler 6 bis 13 in Fig. 1 bildet ein neues Zusatz-BIP-8-Codewort, vergleicht dieses mit dem emfangenen, meldet einen eventuellen Fehler oder den gegenwärtigen Zustand an seine regionale Zentrale 2 bis 4 und speist ein Zusatz-BIP-8-Codewort B4 und ein Korrektur-Codewort für die abgehende Leitung in die Z4-und Z5-Zeitschlitze ein. Die Netzmanagement-Zentrale kann aufgrund der Meldungen der Digitalsignalverteiler 2 bis 13 die momentane Situation erfassen. Sie kann bei Speicherung der Meldungen aber auch Qualitätsangaben über längere Zeiträume machen.

## Patentansprüche

1. Verfahren zur Qualitätsüberwachung eines Digitalsignals in Abschnitten einer Übertragungsstrecke,
**dadurch gekennzeichnet,**
daß ein STM-1 Digitalsignal mit einer Bitrate von 155,52 Mbit/s oder mehrere solche in einem Digitalsignal (STM-N) höherer Ordnung der synchronen Digitalsignal-Hierarchie überwacht werden, indem eine Paritätsüberwachung mit einem Bit-Interleaved-Parity-8-Codewort (BIP-8-Codewort) als B3-Byte eines Pfadrahmenkopfes (VC-4 POH) eines in dem STM-1-Signal enthaltenen virtuellen Containers (VC-4) für eine Bitrate von 149,72 Mbit/s erfolgt,
daß die Abschnitte zwischen einer Digitalsignalquelle (5) des Digitalsignals (STM-1) und einem ersten Digitalsignalverteiler (6), zwischen jeweils zwei benachbarten Digitalsignalverteilern (6,7;7,8; 8,9;9,10;10,11;11,12;12,13) und zwischen dem letzten Digitalsignalverteiler (13) und einer Digitalsignalsenke (14) des Digitalsignals (STM-1) längs einer Übertragungsstrecke (15) gewählt werden,
daß in der Digitalsignalquelle (5) oder in dem ersten folgenden Digitalsignalverteiler (6) - wenn dieser in zwei ausgewählten Z-Zeitschlitzen (Z4,Z5) des Pfadrahmenkopfes (VC-4 POH) beliebige aber gleiche Codewörter empfängt - das BIP-8-Codewort einmal als Zusatz-BIP-8-Codewort (B4) und einmal als Korrektur-Codewort in die zwei ausgewählten Z-Zeitschlitze (Z4,Z5) eingespeist wird,
daß jeder Digitalsignalverteiler (6-13), der beide Zusatz-BIP-8-Codewörter (B4) empfängt, zwei neue Zusatz-BIP-8-Codewörter (B4) einspeist, wenigstens eines von diesen mit dem entsprechenden empfangenen Zusatz-BIP-8-Codewort (B4) vergleicht und einen Mangel oder den gegenwärtigen Zustand an eine Zentrale (1-4) eines zentral gesteuerten Netzersatzschaltsystems meldet und
daß die Digitalsignalsenke (14) wenigstens eines der empfangenen Zusatz-BIP-8-Codewörter (B4) auswertet.

2. Verfahren zur Qualitätsüberwachung eines Digitalsignals in Abschnitten einer Übertragungsstrecke,
**dadurch gekennzeichnet,**
daß ein STM-1 Digitalsignal mit einer Bitrate von 155,52 Mbit/s oder mehrere solche in einem Digitalsignal (STM-N) höherer Ordnung der synchronen Digitalsignal-Hierarchie überwacht werden, indem eine Paritätsüberwachung mit einem Bit-Interleaved-Parity-8-Codewort (BIP-8-Codewort) als B3-Byte eines Pfadrahmenkopfes (VC-4 POH) eines in dem STM-1-Signal enthaltenden virtuellen Containers (VC-4) für eine Bitrate von 149,72 Mbit/s erfolgt,
daß die Abschnitte zwischen einer Digitalsignalquelle (5) des Digitalsignals (STM-1) und einem ersten Digitalsignalverteiler (6), zwischen jeweils zwei benachbarten Digitalsignalverteilern (6,7;7,8; 8,9;9,10;10,11;11,12;12,13) und zwischen dem letzten Digitalsignalverteiler (13) und einer Digitalsignalsenke (14) des Digitalsignals (STM-1) längs einer Übertragungsstrecke (15) gewählt werden,
daß in der Digitalsignalquelle (5) in zwei ausgewählte Z-Zeitschlitze (Z4,Z5) des Pfadrahmenkopfes (VC-4 POH) beliebige Codewörter eingespeist werden,
daß im ersten Digitalsignalverteiler (6) ermittelt wird, in welchen Bitstellen zwischen beiden Codewörtern Ungleichheit besteht,
daß im ersten Digitalsignalverteiler (6) das BIP-8-Codewort als Zusatz-BIP-8-Codewort (B4) in einen der ausgewählten Z-Zeitschlitze (Z4) und das BIP-8-Codewort unter Invertierung in den ermittelten Bitstellen der Ungleichheit als Korrektur-Codewort in den anderen ausgewählten Z-Zeitschlitz (Z5) eingespeist werden,
daß in jedem weiteren Digitalsignalverteiler (7-13) das Zusatz-BIP-8-Codewort (B4) neu gebildet, mit dem ankommenden verglichen und in den einen Z-Zeitschlitz (Z4) eingespeist wird, daß bei Übereinstimmung das empfangene Korrektur-Codewort in den anderen Z-Zeitschlitz (Z5) neu eingespeist wird,
daß bei Nichtübereinstimmung ermittelt wird, in welchen Bitstellen zwischen dem empfangenen Zusatz-BIP-8-Codewort (B4) und dem empfangenen Korrektur-Codewort Ungleichheit besteht, und das Zusatz-BIP-8-Codewort (B4) unter Invertierung in den ermittelten Bitstellen der Ungleichheit als neues Korrektur-Codewort in den anderen Z-Zeitschlitz (Z5) eingespeist wird,
daß ein Mangel oder der gegenwärtige Zustand jeweils an eine Zentrale (1-4) eines zentral gesteuerten Netzersatzschaltsystems gemeldet wird und
daß die Digitalsignalsenke (14) das Zusatz-BIP-8-Codewort (B4) auswertet.

## Claims

1. Method for monitoring the quality of a digital signal in sections of a transmission link, characterised in that an STM-1 digital signal having a bit rate of 155.52 Mbit/s or a plurality of such signals in a digital signal (STM-N) of higher order of the synchronous digital signal heirarchy are monitored by a parity monitoring being performed with a bit-interleaved-parity-8 code word (BIP-8 code word) as a B3 byte of a path overhead (VC-4 POH) of a virtual container (VC-4), included in the STM-1 signal, for a bit rate of 149.72 Mbit/s, in that the sections between a digital signal source (5) of the digital signal (STM-1) and a first digital signal distributor (6), between respectively two neighbouring digital signal distributors (6, 7; 7, 8; 8, 9; 9, 10; 10, 11; 11, 12; 12, 13) and between the last digital signal distributor (13) and a digital signal sink (14) of the digital signal (STM-1) being chosen along a transmission link (15), in that the BIP-8 code word is fed on the one hand as an auxiliary BIP-8 code word (B4) and on the other hand as a correction code word into the two selected Z time slots (Z4, Z5) in the digital signal source (5) or in the first following digital signal distributor (6) - when the latter receives arbitary but identical code words in two selected Z time slots (Z4, Z5) of the path overhead (VC-4 POH), in that each digital signal distributor (6-13) which receives both auxiliary BIP-8 code words (B4) supplies two new auxiliary BIP-8 code words (B4), compares at least one of these code words with the corresponding received auxiliary BIP-8 code word (B4) and reports a deficiency or the present state to a central station (1-4) of a centrally controlled standby network switching system and in that the digital signal sink (14) evaluates at least one of the received auxiliary BIP-8 code words (B4).

2. Method for monitoring the quality of a digital signal in sections of a transmission link, characterised in that an STM-1 digital signal having a bit rate of 155.52 Mbit/s or a plurality of such signals in a digital signal (STM-N) of higher order of the synchronous digital signal heirarchy are monitored by a parity monitoring being performed with a bit-interleaved-parity-8 code word (BIP-8 code word) as a B3 byte of a path overhead (VC-4 POH) of a virtual container (VC-4), included in the STM-1 signal, for a bit rate of 149.72 Mbit/s, in that the sections between a digital signal source (5) of the digital signal (STM-1) and a first digital signal distributor (6), between respectively two neighbouring digital signal distributors (6, 7; 7, 8; 8, 9; 9, 10; 10, 11; 11, 12; 12, 13) and between the last digital signal distributor (13) and a digital signal sink (14) of the digital signal (STM-1) being chosen along a transmission link (15), in that arbitrary code words are fed into two selected Z time slots (Z4, Z5) of the path overhead (VC-4 POH) in the digital signal source (5), in that it is determined in the first digital signal distributor in which bit positions inequality exists between the two code words, in that the BIP-8 code word is fed into one of the selected Z time slots (Z4) in the first digital signal distributor (6) as an auxiliary BIP-8 code word (B4) and the BIP-8 code word is fed into the other selected Z time slot (Z5) as a correction code word upon inversion in the determined bit positions of inequality, in that the auxiliary BIP-8 code word (B4) is newly formed in every other digital signal distributor (7-13), is compared with the incoming word and fed into the one Z time slot (Z4), in that, if there is coincidence, the received correction code word is newly fed into the other Z time slot (Z5), in that if there is non-coincidence, it is determined in which bit positions inequality exists between the received auxiliary BIP-8 code word (B4) and the received correction code word, and the auxiliary BIP-8 code word (B4) is fed into the other Z time slot (Z5) as a new correction code word upon inversion in the determined bit positions of inequality, in that a deficiency or the present state is in each case reported to a central station (1-4) of a centrally controlled standby network switching system and in that the digital signal sink (14) evaluates the auxiliary BIP-8 code word (B4).

## Revendications

1. Procédé pour contrôler la qualité d'un signal numérique dans des sections d'une voie de transmission,
caractérisé par le fait
qu'un signal numérique STM-1 possédant une cadence binaire de 155,52 Mbits/s ou plusieurs signaux de ce type présents dans un signal numérique (STM-N) d'ordre supérieur de la hiérarchie synchrone du signal numérique sont contrôlés par le fait qu'un contrôle de parité est exécuté avec un mot de code Bit-Interleaved-Parity-8 (mot de code BIP-8) en tant qu'octet B3 d'une en-tête de trame de voie (VC-4 POH) d'une zone virtuelle (VC-4) contenue dans le signal STM-1, pour une cadence binaire de 149,72 Mbits/s,
que les sections comprises entre une source (5) de signaux numériques (STM-1) et un premier distributeur (6) du signal numérique sont choisies respectivement entre deux distributeurs voisins (6,7; 7,8; 8,9; 9,10; 10,11; 11,12; 12,13) du signal numérique et entre le dernier distributeur (13) du signal numérique et un récepteur (14) du signal numérique (STM-1), le long d'une voie de transmission (15),
que dans la source (5) du signal numérique ou dans le premier distributeur aval (6) du signal numérique - lorsque ce dernier reçoit des mots de code quelconques, mais identiques dans deux créneaux temporels Z sélectionnés (Z4, Z5) de l'en-tête de trame de voie (PC-4 POH) - le mot de code BIP-8 est inséré une fois en tant que mot de code supplémentaire - BIP-8 (B4) et une fois en tant que mot de code de correction dans les deux créneaux temporels (Z) sélectionnés (Z4, Z5),
que chaque distributeur (6-13) du signal numérique, qui reçoit les deux mots de code BIP-8 supplémentaires (B4), introduit deux nouveaux mots de code BIP-8 supplémentaires (B4), compare au moins l'un de ces mots de code au mot de code BIP-8 supplémentaire (B4) correspondant reçu et signale un défaut ou l'état actuel à un central (1-4) d'un système de commutation ou de remplacement du réseau à commande centrale, et
que le récepteur (14) du signal numérique évalue au moins l'un des mots de code BIP-8 supplémentaires (B4) reçu.

2. Procédé pour contrôler la qualité d'un signal numérique dans des sections d'une voie de transmission,
caractérisé par le fait
qu'un signal numérique STM-1 possédant une cadence binaire de 155,52 Mbits/s ou plusieurs signaux de ce type présents dans un signal numérique (STM-N) d'ordre supérieur de la hiérarchie synchrone du signal numérique sont contrôlés par le fait qu'un contrôle de parité est exécuté avec un mot de code Bit-Interleaved-Parity-8 (mot de code BIP-8) en tant qu'octet B3 d'une en-tête de trame de voie (VC-4 POH) d'une zone virtuelle (VC-4) contenue dans le signal STM-1, pour une cadence binaire de 149,72 Mbits/s,
que les sections comprises entre une source (5) de signaux numériques (STM-1) et un premier distributeur (6) du signal numérique sont choisies respectivement entre deux distributeurs voisins du signal numérique (6,7; 7,8; 8,9; 9,10; 10,11; 11,12; 12,13) et entre le dernier distributeur (13) du signal numérique et un récepteur (14) du signal numérique (STM-1), le long d'une voie de transmission (15),
que des mots de code quelconques sont introduits, dans la source (5) du signal numérique, dans deux créneaux temporels (Z) sélectionnés (Z4,Z5) de l'en-tête de trame de voie (VC-4 POH),
que les positions binaires, dans lesquelles il existe une inégalité entre les deux mots de code, sont déterminées dans le premier distributeur (6) du signal numérique,
que dans le premier distributeur (6) du signal numérique, le mot de code BIP-8 est introduit en tant que mot de code BIP-8 supplémentaire (B4) dans l'un des créneaux temporels (Z) sélectionnés (Z4) et que le mot de code BIP-8 est introduit, moyennant une inversion des positions binaires déterminées de l'inégalité, en tant que mot de code de correction, dans l'autre créneau temporel sélectionné (Z5),
que dans chaque autre distributeur (7-13) du signal numérique, le mot de code BIP-8 supplémentaire (B4) est à nouveau formé, et est comparé avec le mot de code arrivant et est inséré dans le premier créneau temporel Z (Z4),
qu'en cas de coïncidence, le mot de code de correction reçu est introduit à nouveau dans l'autre créneau temporel Z (Z5),
qu'en cas de non-coïncidence, les positions binaires au niveau desquelles il existe une inégalité entre le mot de code BIP-8 supplémentaire (B4) reçu et le mot de code de correction reçu, sont déterminées et le mot de code BIP-8 supplémentaire (B4) est introduit, moyennant une inversion, aux emplacements binaires déterminés de l'inégalité, en tant que nouveau mot de code de correction dans l'autre créneau temporel Z (Z5),
qu'un défaut ou l'état actuel est signalé respectivement à un central 1-4 d'un système de commutation de remplacement du réseau à commande centrale, et
que le récepteur (14) du signal numérique évalue le mot de code BIP-8 supplémentaire (B4).
